# FASCICULE DE BREVET EUROPEEN

(11) **EP 2 708 023 B1**
(45) Date de publication et mention de la délivrance du brevet: **26.06.2019**
(21) Numéro de dépôt: 12721483.1
(22) Date de dépôt: 09.05.2012
(51) Int. Cl.: H04N 5/345, H04N 5/376

(54) **DISPOSITIF D'ADRESSAGE DE LIGNES D'UN CIRCUIT DE COMMANDE POUR MATRICE ACTIVE DE DETECTION**
VORRICHTUNG ZUR ADRESSIERUNG VON LEITUNGEN EINES STEUERKREISES FÜR EINE AKTIVE DETEKTIONSMATRIX
DEVICE FOR ADDRESSING LINES OF A CONTROL CIRCUIT FOR AN ACTIVE DETECTION MATRIX

(30) Priorité: 10.05.2011 FR 1154029
(43) Date de publication de la demande: 19.03.2014
(73) Titulaire: Trixell S.A.S., 38430 Moirans (FR)
(72) Inventeur: BLANCHON, David, F-38430 Moirans (FR); RACINE, Benoît, F-38430 Moirans (FR)
(74) Mandataire: Collet, Alain
(86) Numéro de dépôt international: PCT/EP2012/058555
(87) Numéro de publication internationale: WO 2012/152836

(56) Documents cités:
- WO-A1-2011/027661
- GB-A- 2 317 742
- US-A- 5 536 932
- US-A1- 2002 172 327
- US-A1- 2011 102 623

## Description

La présente invention concerne un dispositif d'adressage de lignes d'un circuit de commande adapté pour commander les lignes d'une matrice active de détection. Elle s'applique notamment à des matrices actives utilisées par exemple à des fins de détection dans des dispositifs d'imagerie par rayonnements ionisants, par exemple par rayons X, telles que des dalles de type TFT, selon le sigle désignant la terminologie anglaise "Thin Film Transistor" ou transistor couches minces.

Une matrice active de détection, par exemple une dalle de type TFT permettant l'acquisition d'une image représentative d'un rayonnement incident sur un ensemble détecteur, comprend une pluralité de cellules électro-optiques arrangées en lignes et en colonnes. Dans une application d'imagerie par rayonnements ionisants, un ensemble détecteur peut comprendre une telle matrice de détection, permettant alors l'acquisition d'une image représentative du rayonnement incident sur l'ensemble détecteur. Chaque cellule de l'arrangement peut être commandée par un dispositif de commutation, et peut par exemple être contrôlée par l'application d'un champ électrique appliqué via deux électrodes encadrant la cellule. L'ensemble constitué par le dispositif de commutation, les électrodes et la cellule est communément désigné "pixel". Le dispositif de commutation peut par exemple être formé par un transistor de commutation. Par exemple, chaque ligne de la matrice peut être connectée aux grilles des transistors de commutation d'une rangée de pixels. Ainsi, pour chaque trame, les lignes peuvent être sélectionnées en séquence, l'une après l'autre suivant un sens de balayage des lignes de la matrice, pendant un temps de sélection de ligne correspondant à une fraction de la durée de la trame, permettant l'application sur les pixels de la rangée de signaux appropriés, par exemple des tensions sur les électrodes. Ainsi la sélection d'une ligne correspond à l'application pendant un temps de sélection de ligne correspondant, d'un signal de niveau haut commandant l'état passant des dispositifs de commutation de la rangée de pixels correspondante. En dehors du temps de sélection de la ligne, les dispositifs de commutation sont maintenus à un état bloqué via l'application d'un signal de niveau bas approprié. Par exemple, lorsque les dispositifs de commutation sont des transistors, les signaux à appliquer étant alors des tensions, il est habituel de désigner VGon la tension correspondant au niveau haut et partant à l'état passant du transistor de commutation, et VGoff la tension correspondant au niveau bas et à l'état bloqué du transistor de commutation.

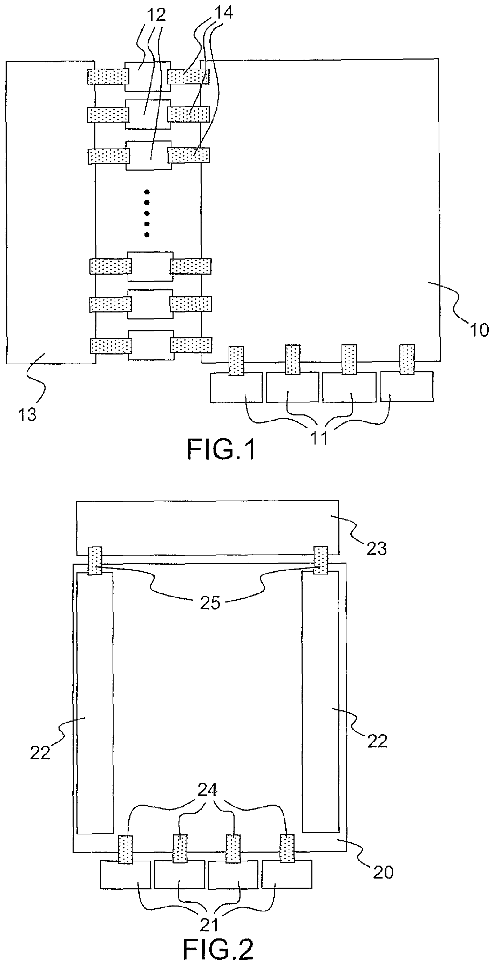

D'une manière en elle-même connue de l'état de la technique, la commande des lignes peut être assurée par des circuits de commande comprenant un ou plusieurs registres à décalage en série, chacun des registres à décalage comprenant une pluralité d'étages en cascade, chaque étage étant apte à commuter les niveaux haut et bas du signal appliqué aux dispositifs de commutation en sortie sur une ligne correspondante de la matrice, selon le séquencement de la sélection des lignes, par exemple selon un balayage vertical. Les circuits de commande peuvent être mis en oeuvre dans des circuits intégrés, un même circuit intégré pouvant par exemple comprendre une pluralité de circuits de commande pour une pluralité de lignes de la matrice. Les circuits intégrés peuvent par exemple être extérieurs à la matrice, et se connecter à celle-ci par des moyens filaires, par exemple des nappes flexibles. Les circuits intégrés peuvent par exemple être directement rapportés sur les nappes flexibles, celles-ci les connectant non seulement à la matrice mais également à un circuit de contrôle et d'alimentation. De tels systèmes présentent cependant l'inconvénient de requérir des procédés complexes de réalisation, et appellent un grand nombre de vérifications en cours de fabrication, ainsi qu'un grand nombre de réparation, dû au nombre de défauts potentiels liés à toutes les étapes des procédés de réalisation. Un exemple de système existant comprenant des circuits intégrés de commande disposés sur des nappes flexibles est décrit en détails ci-après en référence à la figure 1.

Un autre inconvénient des systèmes d'adressage connus, est que ceux-ci imposent que l'adressage des lignes soit réalisé à la suite, sans qu'il ne soit permis qu'une ligne ne soit pas adressée ; ainsi les lignes sont adressées les unes à la suite des autres, et il n'existe aucune pause entre l'adressage de deux lignes successives, ce dernier point pouvant être particulièrement préjudiciable lorsque la matrice est utilisée à des fins de détection, pour lesquels il est nécessaire de permettre un temps d'intégration des charges provenant des pixels de la dalle. En outre, ces systèmes imposent d'adresser l'intégralité de la matrice, selon un mécanisme d'adressage figé ; or il peut s'avérer en pratique inutile voire préjudiciable d'adresser l'intégralité de la dalle, par exemple dans des utilisations typiques où la dalle est utilisée à des fins de détection, notamment dans le cadre d'applications d'imagerie par rayons X, dans lesquelles l'opérateur ou la praticien s'applique fréquemment à visualiser avec une précision accrue des parties spécifiques de la scène imagée, via des opérations dites de "zoom".

Le brevet US 5,536,932 décrit un multiplexeur en polysilicium pour des matrices bidimensionnelles de détection d'image.

La demande de brevet publiée sous la référence GB 2,317,742 décrit un dispositif d'imagerie.

La demande de brevet US 2002/172327 décrit un système de détection d'images radiologiques pour un générateur de rayons X par balayage.

La demande de brevet US 2011/0102623 décrit un dispositif d'imagerie comprenant une pluralité d'étages aptes à délivrer des signaux de commutation aux lignes de pixels de la matrice, chaque ligne ayant un étage correspondant.

Un but de la présente invention est de pallier au moins les inconvénients précités, en proposant un circuit de commande pour matrice active de détection pour imagerie par rayonnements ionisants, telle qu'une dalle TFT, présentant une structure compacte et robuste, comprenant essentiellement des transistors TFT de type unique N ou P.

Selon une spécificité de la présente invention, il est permis d'adresser les lignes de la matrice en deux temps, offrant ainsi une fenêtre temporelle entre l'adressage de deux lignes successives.

Un avantage de l'invention est que le dispositif d'adressage selon l'un des modes de réalisation de l'invention décrits ci-après, offre la possibilité de ne pas adresser certaines lignes, augmentant ainsi la vitesse et le rendement globaux du système.

Un autre avantage de l'invention est que le dispositif d'adressage de lignes selon l'un des modes de réalisation de l'invention, offre la possibilité de procéder à une réinitialisation avantageuse des lignes.

A cet effet, l'invention a pour objet un dispositif d'adressage des lignes d'une matrice de détection pour imagerie par rayonnements ionisants, la matrice de détection comprenant une pluralité N de lignes n de pixels et étant réalisée sur un substrat, le dispositif d'adressage étant caractérisé en ce qu'il est également réalisé sur ledit substrat essentiellement à partir de transistors couches minces de type unique N ou P, le dispositif d'adressage comprenant une pluralité d'étages aptes à délivrer en leurs sorties respectives des signaux de commutation entre les niveaux haut et bas, d'un signal appliqué à des dispositifs de commutation sur une ligne correspondante de la matrice de détection, et comprenant une pluralité d'étages aptes à délivrer en leurs sorties respectives des signaux de commutation des niveaux haut et bas d'un signal appliqué à des dispositifs de commutation en sortie sur une ligne correspondante de la matrice et étant caractérisé en ce que chaque étage comprend un étage d'entrée et un étage de sortie, l'étage d'entrée délivrant un signal d'activation de l'étage de sortie, l'étage de sortie délivrant en cas d'activation, ledit signal de commutation de la ligne n correspondante.

Dans un mode de réalisation de l'invention, chaque étage d'entrée d'une ligne n comprend une sortie restituant le signal d'activation, un transistor de sortie de l'étage d'entrée, transmettant une impulsion d'un signal d'horloge au niveau de la sortie d'activation, sa grille étant connectée à un noeud interne de l'étage d'entrée, sa source étant reliée à la ligne de sortie d'activation et son drain recevant le signal d'une première horloge, un premier transistor de commande de l'étage d'entrée étant apte à précharger la grille du transistor de sortie de l'étage d'entrée, sa source étant connectée à la grille du transistor de sortie de l'étage d'entrée, sa grille et son drain étant reliés à la sortie d'activation de l'étage de la ligne précédente, un deuxième transistor de commande de l'étage d'entrée étant apte à décharger la grille du transistor de sortie de l'étage d'entrée, son drain étant connecté à la grille du transistor de sortie de l'étage d'entrée.

Dans un mode de réalisation de l'invention, chaque étage de sortie d'une ligne n peut comprendre une sortie restituant le signal de commutation de la ligne n, un transistor de sortie de l'étage de sortie, transmettant une impulsion d'un signal d'horloge au niveau de la sortie, dont la grille est connectée à un noeud interne de l'étage de sortie, la source est reliée à la sortie de l'étage de sortie et le drain reçoit le signal d'une troisième horloge, un premier transistor de commande de l'étage de sortie étant apte à précharger la grille du transistor de sortie de l'étage de sortie, sa source étant connectée à la grille du transistor de sortie de l'étage de sortie, sa grille et son drain étant reliés à la sortie d'activation de l'étage d'entrée, un deuxième transistor de commande de l'étage de sortie étant apte à décharger la grille du transistor de sortie de l'étage de sortie, son drain étant connecté à la grille du transistor de sortie de l'étage de sortie.

Dans un mode de réalisation de l'invention, un condensateur de compensation de l'étage d'entrée peut être disposé entre le signal d'une seconde horloge, en opposition de phase du signal de ladite première horloge.

Dans un mode de réalisation de l'invention, un condensateur d'élévation de l'étage d'entrée peut être connecté entre la grille et la source du transistor de sortie de l'étage d'entrée.

Dans un mode de réalisation de l'invention, un transistor de décharge de l'étage d'entrée peut être connecté à la sortie d'activation en sortie de l'étage d'entrée, sa grille étant reliée à la grille du deuxième transistor de commande de l'étage d'entrée et au signal de sortie d'activation de l'étage suivant n+1.

Dans un mode de réalisation de l'invention, un condensateur de compensation de l'étage de sortie peut être disposé entre le signal d'une quatrième horloge, en opposition de phase du signal de ladite troisième horloge.

Dans un mode de réalisation de l'invention, un condensateur d'élévation de l'étage de sortie peut être connecté entre la grille et la source du transistor de sortie de l'étage de sortie.

Dans un mode de réalisation de l'invention, un transistor de décharge de l'étage de sortie peut être connecté à la sortie de l'étage de sortie, sa grille étant reliée à la grille du deuxième transistor de commande de l'étage de sortie et au signal de sortie d'activation de l'étage suivant.

Dans un mode de réalisation de l'invention, chaque étage d'entrée et de sortie d'une ligne n peut comprendre un commutateur de réinitialisation configuré pour disposer tous les transistors dans leur état bloqué.

Dans un mode de réalisation de l'invention, les commutateurs de réinitialisation peuvent être formés par des transistors de réinitialisation, un transistor de réinitialisation de l'étage d'entrée présentant une grille commandée par une impulsion d'un signal de réinitialisation, sa source étant connectée aux sources du deuxième transistor de commande de l'étage d'entrée, et son drain étant connecté au drain du deuxième transistor de commande de l'étage d'entrée.

Dans un mode de réalisation de l'invention, les commutateurs de réinitialisation sont formés par des transistors de réinitialisation, un transistor de réinitialisation de l'étage de sortie présentant une grille commandée par une impulsion d'un signal de réinitialisation, sa source étant connectée aux sources du deuxième transistor de commande de l'étage de sortie, et son drain étant connecté au drain du deuxième transistor de commande de l'étage de sortie.

Dans un mode de réalisation de l'invention, chaque étage de sortie d'une ligne n peut comprendre un commutateur de réinitialisation de lignes configuré pour imposer un niveau bas aux signaux de commutation.

Dans un mode de réalisation de l'invention, le commutateur de réinitialisation de ligne peut être formé par un transistor de réinitialisation de ligne commandé via sa grille par un signal de réinitialisation de ligne, son drain étant connecté à la source du transistor de sortie de l'étage de sortie, sa source étant connectée aux sources du deuxième transistor de commande de l'étage d'entrée, du transistor de décharge de l'étage d'entrée, du deuxième transistor de commande de l'étage de sortie et du transistor de décharge de l'étage de sortie.

Dans un mode de réalisation de l'invention, chaque étage de sortie d'une ligne n peut comprendre un commutateur de réinitialisation de matrice configuré pour imposer un niveau haut ou bas à la matrice de détection.

Dans un mode de réalisation de l'invention, le commutateur de réinitialisation de matrice peut être formé par un transistor de réinitialisation de matrice commandé via sa grille et son drain par un signal de réinitialisation de matrice, sa source étant connectée à la source du transistor de sortie de l'étage de sortie.

La présente invention a également pour objet un circuit intégré comprenant une matrice de pixels disposés en une pluralité n de lignes, les lignes étant adressées par une pluralité n d'étages de sortie d'un dispositif d'adressage de lignes suivant l'un quelconque des modes de réalisation décrits, également réalisé dans le circuit intégré.

D'autres caractéristiques et avantages de l'invention apparaîtront à la lecture de la description, donnée à titre d'exemple, faite en regard des dessins annexés qui représentent :
- la figure 1, un schéma illustrant la structure globale d'un système existant comprenant une matrice active d'affichage et des circuits de commande associés, selon un mode de réalisation connu ;
- la figure 2, un schéma illustrant la structure globale d'un système existant de structure intégrée, comprenant une matrice active d'affichage et des circuits de commande associés, selon un mode de réalisation connu ;
- la figure 3, un schéma électrique illustrant la structure d'un registre formant un étage d'un dispositif d'adressage de lignes d'une matrice d'affichage, selon un mode de réalisation connu ;
- la figure 4, un diagramme des temps illustrant le fonctionnement d'un dispositif d'adressage de lignes tel qu'illustré par la figure 3 ;
- la figure 5, un schéma électrique illustrant la structure d'un étage d'un dispositif d'adressage de lignes, selon un mode de réalisation de l'invention ;
- la figure 6, un diagramme des temps illustrant le fonctionnement d'un dispositif d'adressage de lignes, selon un mode de réalisation de l'invention.

La figure 1 présente un schéma illustrant la structure globale d'un système existant comprenant une matrice active d'affichage et des circuits de commande associés, selon un mode de réalisation en lui-même connu.

Selon une technique en elle-même connue, une matrice 10 peut être reliée à une pluralité de circuits de commande des colonnes ou de circuits d'intégration de charges ou adresseurs de colonnes 11 commandant les colonnes de la matrice 10, et à une pluralité d'adresseurs de lignes 12. Les adresseurs 11, 12 peuvent être reliés d'une part à un ou plusieurs cartes électroniques 13 via des nappes flexibles 14, et d'autre part à la matrice 10, également via des nappes flexibles 14. Un même adresseur de colonnes 11 peut commander un ou une pluralité de colonnes de la matrice 10 ; de la même manière, un même circuit de commande de lignes 12 peut commander un ou une pluralité de lignes. Dans un mode de réalisation connu, les adresseurs 11, 12 peuvent par exemple directement être montés sur une seule nappe flexible les reliant de part et d'autre respectivement à la carte électronique 13 et à la matrice 10.

La figure 2 présente un schéma illustrant la structure globale d'un système existant de structure intégrée, comprenant une matrice active d'affichage et des circuits de commande associés, selon un mode de réalisation connu.

Une matrice d'affichage 20 peut par exemple contenir des adresseurs de lignes 22 intégrés à sa structure. Dans l'exemple illustré par la figure 2, les adresseurs de colonnes 21 peuvent être des circuits intégrés extérieurs à la matrice 20 et connectés à celle-ci par des nappes flexibles 24, d'une manière similaire à l'exemple de réalisation décrit précédemment en référence à la figure 1. Les adresseurs de colonnes 21 peuvent également être intégrés à la structure de la matrice 20. Des nappes flexibles 25 peuvent également relier électriquement les adresseurs de lignes 22 à une carte électronique 23.Dans un souci d'intégration, les adresseurs de lignes 22 peuvent dans un exemple de réalisation être disposés de part et d'autre de la matrice 20.

La présente invention propose de recourir à une structure intégrée, réalisée suivant une technologie permettant la réalisation de dispositifs électroniques semi-conducteurs par un dépôt de couches sur un substrat, par exemple de type silicium amorphe (a-Si), TFT, silicium polycristallin, semiconducteur organique, oxyde de zinc Gallium Indium amorphe (Ga₂O₃-In₂O₃-ZnO), les dispositifs semi-conducteurs étant essentiellement des transistors TFT de type unique, c'est-à-dire de type P ou de type N, la structure intégrée formant un dispositif d'adressage des lignes d'une matrice de détection, utilisée par exemple dans des dispositifs d'imagerie, par exemple par rayons X. Une telle réalisation permet un gain en terme de compacité et de coût de fabrication. Elle permet également un gain en terme de rendement : en effet, si une ligne est coupée ou partiellement coupée, le fait de disposer des adresseurs de lignes de part et d'autre permet en tout état de cause d'adresser la ligne dans sa totalité.

Un autre avantage procuré par la présente invention réside dans le fait que celle-ci permet l'adressage d'une ligne particulière sans requérir un nombre important de commandes à cet effet, alors que les dispositifs d'adressage de lignes connus ne permettent pas l'adressage d'une ligne particulière, ou bien requièrent un nombre de commandes non indépendant du nombre de lignes utilisées.

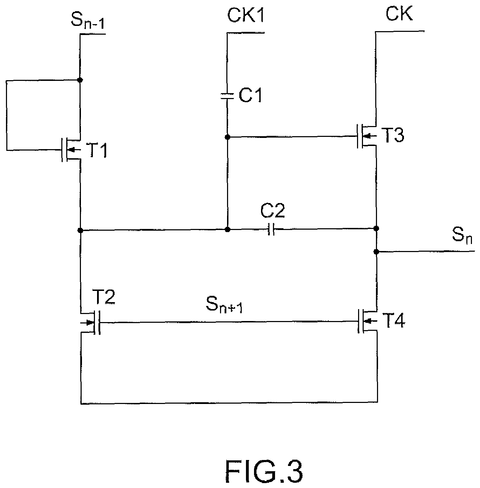

La figure 3 présente un schéma électrique illustrant la structure d'un registre formant un étage d'un dispositif d'adressage de lignes d'une matrice d'affichage, selon un mode de réalisation connu. Une telle structure est par exemple décrite dans la demande de brevet française FR 2,743,662 précitée.

Un registre à décalage formant un étage n d'un dispositif d'adressage de lignes peut comprendre une ligne de sortie restituant un signal de sortie Sn ; par exemple, si la matrice comprend N lignes, chaque ligne n est associée à un étage n, les N étages 1 à N propageant via leurs sorties respectives S1 à SN, une impulsion d'entrée formée par un signal IN de déclenchement de balayage des lignes transmettant une impulsion d'horloge pour chaque nouvelle trame. De la sorte, les lignes 1 à N peuvent être sélectionnées les unes après les autres. L'étage n du dispositif d'adressage peut comprendre un transistor de sortie T3, transmettant une impulsion d'un signal d'horloge en sortie Sn. Le transistor de sortie T3 est par exemple un transistor à effet de champ, de type communément désigné par l'acronyme MOSFET. Plus précisément, le transistor de sortie T3 peut être un transistor MOSFET dit de type n, communément désigné par le sigle N-MOS. La grille du transistor de sortie T3 peut être connectée à un noeud interne de l'étage du dispositif d'adressage, sa source peut être reliée à la sortie Sn et son drain peut recevoir le signal d'une première horloge Ck. Un condensateur d'élévation C2 peut être connecté entre la grille et la source du transistor de sortie T3. Un premier transistor de commande T1 est apte à précharger la grille du transistor de sortie T3. La source du premier transistor de commande T1 est ainsi connectée à la grille du transistor de sortie T3. La grille du premier transistor de commande T1 est commandée par la sortie Sn-1 de l'étage n-1 du dispositif d'adressage de la ligne précédente n-1. La grille du premier transistor de commande T1 du premier étage du dispositif d'adressage, correspondant à la première ligne de la matrice, peut être commandée par le signal IN de déclenchement de balayage des lignes. Le drain du premier transistor de commande T1 peut être relié à une tension indépendante, ou bien à la grille du premier transistor de commande T1 ainsi que dans l'exemple illustré par la figure 2.

Un deuxième transistor de commande T2 est apte à décharger la grille du transistor de sortie T3. Le drain du deuxième transistor de commande T2 est ainsi connecté à la grille du transistor de sortie T3. La grille du deuxième transistor de commande T2 est reliée au signal de sortie Sn+1 de l'étage n+1 du dispositif d'adressage, correspondant à la ligne suivante n+1. La grille du transistor de commande T2 de l'étage N du dispositif d'adressage, correspondant à la dernière ligne N, peut être commandée par un signal spécifique. La source du deuxième transistor de commande T2 peut par exemple être polarisée à la tension VGoff. Un condensateur de compensation C1 peut avantageusement être disposé entre le signal d'une seconde horloge Ck1, en opposition de phase du signal de la première horloge Ck. Le condensateur de compensation C1 permet de compenser les effets de la capacité parasite entre la grille et le drain du transistor de sortie T3 pendant les commutations du signal de la première horloge Ck appliqué au drain du transistor de sortie T3.

Avantageusement, un transistor de décharge T4 peut être connecté à la sortie Sn de l'étage n du dispositif d'adressage de lignes, afin de faciliter la décharge de la sortie Sn à la fin de la phase de sélection de la ligne. La grille du transistor de décharge T4 est reliée à la grille du deuxième transistor de commande T2.

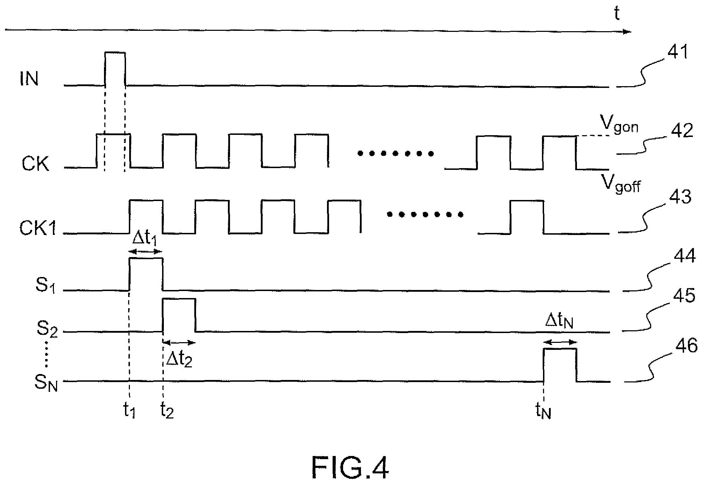

La figure 4 présente un diagramme des temps illustrant le fonctionnement d'un dispositif d'adressage de lignes tel qu'illustré par la figure 3.

Un premier chronogramme 41 représente le signal IN de déclenchement de balayage des lignes, au cours d'une période de temps correspondant à la transmission d'une trame.

Un deuxième chronogramme 42 représente pour la même période de temps le signal de la première horloge Ck ; un troisième chronogramme 43 représente le signal de la seconde horloge Ck1.

Un quatrième chronogramme 44 représente pour la même période de temps le signal de la sortie S1 du premier étage du dispositif d'adressage de lignes ; un cinquième chronogramme 45 représente le signa! de la sortie S2 du deuxième étage du dispositif d'adressage de lignes ; un sixième chronogramme 46 représente le signal de sortie SN de l'étage N du dispositif d'adressage de lignes.

Les signaux logiques représentés par les différents chronogrammes 41 à 46 présentent par exemple un niveau bas correspondant au niveau VGoff, et un niveau haut correspondant au niveau VGon, ces niveaux permettant de commander respectivement l'état bloqué et l'état passant d'un transistor.

Le balayage d'une trame est déclenché par le signal IN, transmettant une impulsion pour chaque nouvelle trame.

Cette impulsion du signal IN va se "propager" en sortie S₁ du premier étage, puis de ligne en ligne, sur les sorties S₂, S₃,..., Sₙ, ...,S_{N} des étages 1 à N, en sorte que les lignes de la matrice peuvent être sélectionnées l'une après l'autre, pendant une phase de sélection de ligne correspondante, Δt₁, Δt₂, ...Δtₙ,...Δt_{N}, une fois par trame, à la cadence des signaux d'horloge.

D'un étage au suivant, les rôles des signaux des horloges Ck et Ck1 sont échangés : par exemple, dans les étages n-1 et n+1, c'est le transistor de sortie T3 qui reçoit le signal de la première horloge Ck et le condensateur de compensation C1 qui reçoit le signal de la seconde horloge Ck1.

Les signaux des horloges Ck et Ck1 sont complémentaires. Le niveau haut Vgon des impulsions d'horloge est défini pour que les transistors de commutation de la matrice soient capables de charger sans perte par exemple les niveaux de tension vidéo à appliquer sur les électrodes des pixels, et pour permettre la commutation à l'état passant, et suffisamment conducteur, des transistors de sortie T3 des étages du dispositif d'adressage de lignes.

La phase de sélection Δtₙ₋₁ de la ligne n-1 débute à un instant tₙ₋₁ et se termine à un instant tₙ. La phase de sélection Δtₙ de la ligne n débute à l'instant tₙ et se termine à l'instant tₙ₊₁, et ainsi de suite...

Ainsi, le fonctionnement d'un dispositif d'adressage de lignes tel que décrit en référence aux figures 3 et 4 impose que les lignes soient adressées les unes après les autres, sans qu'aucune pause ne soit réalisable entre l'adressage de deux lignes consécutives. En outre, le fonctionnement d'un tel dispositif impose une obligation d'adresser toutes les lignes d'une matrice, et ne permet pas de ne pas adresser certaines lignes.

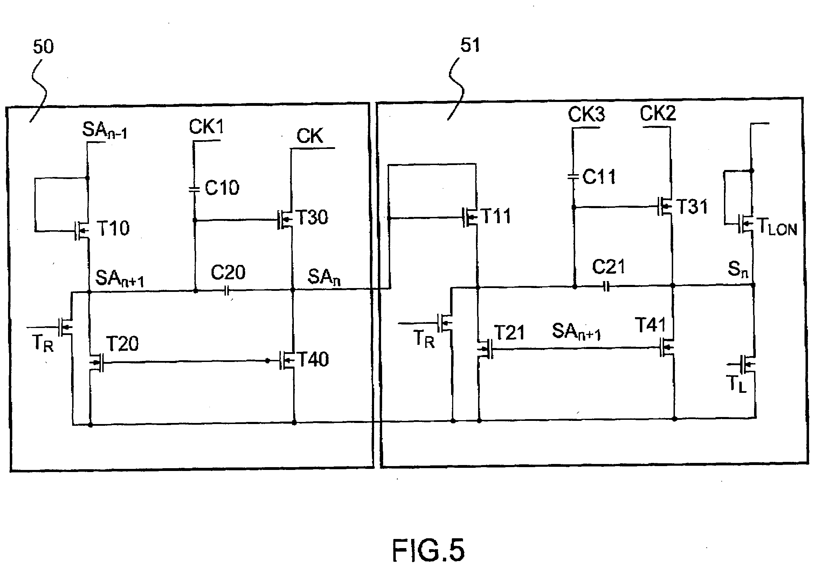

La figure 5 présente un schéma électrique illustrant la structure d'un dispositif d'adressage de lignes pour une matrice de détection, selon un mode de réalisation de l'invention.

La présente invention propose qu'une structure intégrée telle que décrite précédemment en référence aux figures 1 à 4, illustrant des dispositifs d'adressage de lignes s'appliquant à une matrice d'affichage, soit appliquée à un dispositif d'adressage de lignes pour une matrice de détection pour imagerie par rayonnements ionisants, par exemple par rayons X. La structure intégrée formant un dispositif d'adressage de lignes selon la présente invention peut comprendre essentiellement des transistors TFT de type unique, c'est-à-dire de type P ou bien de type N, le type N pouvant être préféré pour ses meilleures performances. Ainsi, tous les transistors décrits par la suite peuvent être à couches minces (TFT) et de type unique N ou P.

La structure illustrée par la figure 5 correspond à un mode de réalisation avantageux dans lequel chaque étage n du dispositif d'adressage de lignes comprend un étage d'entrée 50 et un étage de sortie 51. Pour un étage n du dispositif d'adressage de lignes, chacun des étages d'entrée et de sortie 50, 51 comprend par exemple la plupart des éléments compris dans un étage n d'adressage de lignes tel que décrit précédemment en référence à la figure 3. Il est à noter que dans les exemples de réalisation décrits, chaque ligne n de la matrice est associée à un étage n du dispositif d'adressage. Il est cependant possible, dans des exemples alternatifs non décrits par les figures, d'envisager des structures de dispositifs d'adressage de lignes dans lesquels un étage donné commande une pluralité de lignes, ou bien dans lesquels certaines lignes ne sont pas commandées par un étage.

Ainsi, l'étage d'entrée 50 d'un étage n du dispositif d'adressage de lignes peut être formé par un registre à décalage comprenant une ligne de sortie restituant en sortie un signal d'activation SAn. L'étage d'entrée 50 peut comprendre un transistor de sortie de l'étage d'entrée T30, transmettant une impulsion d'un signal d'horloge au niveau de la sortie d'activation SAn. La grille du transistor de sortie de l'étage d'entrée T30 peut être connectée à un noeud interne de l'étage d'entrée du dispositif d'adressage, sa source peut être reliée à la sortie d'activation SAn et son drain peut recevoir le signal d'une première horloge Ck. Un condensateur d'élévation de l'étage d'entrée C20 peut être connecté entre la grille et la source du transistor de sortie de l'étage d'entrée T30. Un premier transistor de commande de l'étage d'entrée T10 est apte à précharger la grille du transistor de sortie de l'étage d'entrée T30. La source du premier transistor de commande de l'étage d'entrée T10 est ainsi connectée à la grille du transistor de sortie de l'étage d'entrée T30. La grille et le drain du premier transistor de commande de l'étage d'entrée T10 sont commandés par la sortie d'activation SAn-1 de l'étage n-1 du dispositif d'adressage de la ligne précédente n-1.

Un deuxième transistor de commande de l'étage d'entrée T20 est apte à décharger la grille du transistor de sortie de l'étage d'entrée T30. Le drain du deuxième transistor de commande de l'étage d'entrée T20 est ainsi connecté à la grille du transistor de sortie de l'étage d'entrée T30. Un condensateur de compensation de l'étage d'entrée C10 peut avantageusement être disposé entre le signal d'une seconde horloge Ck1, en opposition de phase du signal de la première horloge Ck.

Avantageusement, un transistor de décharge de l'étage d'entrée T40 peut être connecté à la sortie d'activation SAn de l'étage d'entrée 50 de l'étage n du dispositif d'adressage de lignes. La grille du transistor de décharge de l'étage d'entrée T40 est reliée à la grille du deuxième transistor de commande de l'étage d'entrée T20 ; elle est également reliée au signal de sortie d'activation SAn+1 de l'étage suivant n+1.

D'une manière similaire, l'étage de sortie 51 d'un étage n du dispositif d'adressage de lignes peut être formé par un registre à décalage comprenant une ligne de sortie restituant en sortie un signal Sn. L'étage de sortie 51 peut comprendre un transistor de sortie de l'étage de sortie T31, transmettant une impulsion d'un signal d'horloge au niveau de la sortie Sn. La grille du transistor de sortie de l'étage de sortie T31 peut être connectée à un noeud interne de l'étage de sortie du dispositif d'adressage, sa source peut être reliée à la sortie Sn et son drain peut recevoir le signal d'une troisième horloge Ck2. Un condensateur d'élévation de l'étage de sortie C21 peut être connecté entre la grille et la source du transistor de sortie de l'étage de sortie T31. Un premier transistor de commande de l'étage de sortie T11 est apte à précharger la grille du transistor de sortie de l'étage de sortie T31. La source du premier transistor de commande de l'étage de sortie T11 est ainsi connectée à la grille du transistor de sortie de l'étage de sortie T31. La grille et le drain du premier transistor de commande de l'étage de sortie T11 sont commandés par la sortie d'activation SAn de l'étage d'entrée 50 de l'étage n du dispositif d'adressage.

Un deuxième transistor de commande de l'étage de sortie T21 est apte à décharger la grille du transistor de sortie de l'étage de sortie T31. Le drain du deuxième transistor de commande de l'étage de sortie T21 est ainsi connecté à la grille du transistor de sortie de l'étage de sortie T31. Un condensateur de compensation de l'étage de sortie C11 peut avantageusement être disposé entre le signal d'une quatrième horloge Ck3, en opposition de phase du signal de la troisième horloge Ck2. Une particularité des troisième et quatrième horloges Ck2, Ck3 est que leurs rapports cycliques peuvent être différents, et que la somme de leurs périodes respectives à leur niveau haut correspond à la période des première et deuxième horloges Ck, Ck1.

Avantageusement, un transistor de décharge de l'étage de sortie T41 peut être connecté à la sortie Sn de l'étage de sortie 51 de l'étage n du dispositif d'adressage de lignes, délivrant le signal d'activation de la ligne n. La grille du transistor de décharge de l'étage de sortie T41 est reliée à la grille du deuxième transistor de commande de l'étage de sortie T21 ; elle est également reliée à la sortie d'activation SAn+1 de l'étage suivant n+1.

Selon une autre spécificité de la présente invention, l'étage d'entrée 50 comprend également un transistor de réinitialisation de l'étage d'entrée TR dont la grille est commandée par une impulsion d'un signal de réinitialisation. La source du transistor de réinitialisation de l'étage d'entrée TR peut être connectée aux sources du deuxième transistor de commande de l'étage d'entrée T20. Le drain du transistor de réinitialisation de l'étage d'entrée TR peut être connecté au drain du deuxième transistor de commande de l'étage d'entrée T20.

De la même manière, l'étage de sortie 51 comprend également un transistor de réinitialisation de l'étage de sortie TR dont la grille est, ainsi que la grille du transistor de réinitialisation de l'étage d'entrée, commandée par une impulsion du signal de réinitialisation. La source du transistor de réinitialisation de l'étage de sortie TR peut être connectée aux sources respectivement du deuxième transistor de commande de l'étage de sortie T21 et du transistor de décharge de l'étage de sortie T41, ainsi qu'aux sources respectivement du deuxième transistor de commande de l'étage d'entrée T20 et du transistor de décharge de l'étage d'entrée T40. Le drain du transistor de réinitialisation de l'étage de sortie TR peut être connecté au drain du deuxième transistor de commande de l'étage de sortie T21.

Ainsi, une impulsion de réinitialisation permet de d'imposer aux différents transistors compris dans les étages d'entrée 50 et de sortie 51, leur état bloqué.

De plus, l'étage de sortie 51 peut comprendre un transistor de réinitialisation de ligne TL. Le transistor de réinitialisation de ligne TL est commandé via sa grille par un signal spécifique. Le drain du transistor de réinitialisation de ligne TL est connecté à la source du transistor de sortie de l'étage de sortie T31. La source du transistor de réinitialisation de ligne TL peut être connectée aux sources des transistors T20, T40, T21 et T41. Le transistor de réinitialisation de ligne TL d'un étage n permet de forcer la tension sur la ligne n à l'état bas. Le transistor de réinitialisation de ligne TL permet de contrôler la tension sur les lignes, c'est-à-dire aux sorties des étages de sortie des étages, et d'y appliquer une tension basse impédance, notamment pendant des "temps morts". En effet, d'une manière typique, le pilotage des détecteurs à rayons X, par exemple, comprend une phase de réinitialisation, suivie d'une phase d'application des rayonnements X ou "fenêtre X", puis d'une phase de lecture. Pendant la fenêtre X, les rayons X se transforment en électrons dans les photodiodes ; la durée de la fenêtre X est relativement longue, typiquement jusqu'à 3,2 secondes, ainsi le transistor de réinitialisation de ligne TL permet d'éviter toute dérive de la matrice.

Avantageusement encore, chaque étage de sortie 51 peut comprendre un commutateur de réinitialisation de matrice, par exemple formé par un transistor de réinitialisation de matrice TL_{ON} permettant de réaliser une réinitialisation complète de la matrice. Le transistor de réinitialisation de matrice TL_{ON} peut être commandé par un signal de réinitialisation de matrice appliqué à sa grille et à son drain. La source du transistor de réinitialisation de matrice TL_{ON} peut être connectée à la source du transistor de sortie de l'étage de sortie T31. Le signal de réinitialisation de matrice commandant le transistor de réinitialisation de matrice TL_{ON} peut être la tension VGoff ou la tension d'activation VGon. Lorsque le transistor de réinitialisation de matrice TL_{ON} est actif, c'est-à-dire lorsque la tension d'activation VGon est appliquée, la tension d'activation est alors appliquée à l'ensemble de la matrice.

En pratique, une réinitialisation complète de la matrice peut être réalisée suivant la séquence définie par une activation des transistors de réinitialisation de matrice TL_{ON} pendant une durée suffisante, suivie d'une activation des transistors de réinitialisation de lignes TL permettant de remettre les lignes à la tension VGoff.

Un avantage procuré par le dispositif d'adressage de lignes tel que décrit ci-dessus en référence à la figure 5, est qu'il permet d'adresser les lignes en deux temps, en offrant l'opportunité d'une pause entre l'adressage de deux lignes consécutives. Cet avantage est majeur notamment lorsque le dispositif d'adressage de lignes s'insère dans un système où il est nécessaire d'intégrer des charges provenant des pixels de la matrice, par exemple lorsque celle-ci est utilisée comme un capteur, par exemple pour des applications d'imagerie telles que des applications d'imagerie médicale. La sensibilité de la dalle est dans un tel cas d'autant meilleure, que le temps d'intégration des charges est long. En outre, la pause entre l'adressage de deux lignes consécutives permet un pilotage plus robuste aux défauts éventuels de la matrice.

Un autre avantage procuré par le dispositif d'adressage de lignes réside en la possibilité de permettre de ne pas adresser des lignes choisies en tant que de besoin. Cet avantage peut permettre d'augmenter la vitesse globale du système dans lequel le dispositif d'adressage de lignes s'intègre, en autorisant de ne pas adresser certaines lignes. L'étage d'entrée 50 peut par exemple être adressé très rapidement, en augmentant la fréquence des signaux des première et deuxième horloges Ck, Ck1 jusqu'à la ligne voulue, pour réactiver les signaux des troisième et quatrième horloges Ck2, Ck3 dès que ladite ligne voulue est atteinte. Un tel mode de fonctionnement peut s'avérer particulièrement avantageux pour des applications où un utilisateur, par exemple dans le cadre précité de la réalisation d'imagerie par rayons X, souhaite réaliser un "zoom" sur une zone particulière d'une scène.

Un autre avantage procuré par le dispositif d'adressage de lignes réside en la possibilité de réaliser une réinitialisation simultanée d'une pluralité de lignes de la matrice réparties en groupes, la totalité des lignes de la matrice étant réinitialisée par des réinitialisations successives des différents groupes de lignes. Un tel mode de réalisation peut s'avérer particulièrement avantageux dans des applications où la matrice est formée par une dalle utilisée en guise de capteur, par exemple pour de l'imagerie par rayons X, et permet notamment de diminuer les charges induites sur les conducteurs colonnes de la matrice. Un tel mode de réalisation est notamment décrit dans la demande de brevet FR 2,861,242.

Un autre avantage procuré par un dispositif d'adressage de lignes comprenant un étage d'entrée et un étage de sortie par ligne, est que celui-ci est particulièrement adapté au pilotage de matrices de grandes tailles. En effet, le nombre d'étages par ligne est toujours limité à deux, et le schéma électrique d'un étage donné est indépendant de la taille de la matrice. Cette caractéristique est notamment particulièrement avantageuse dans des application d'imagerie médicale, pour lesquelles le nombre de lignes peut être de l'ordre de plusieurs milliers. Typiquement, le nombre de lignes peut être de 3000 pour des tailles compatibles avec les exigences actuelles.

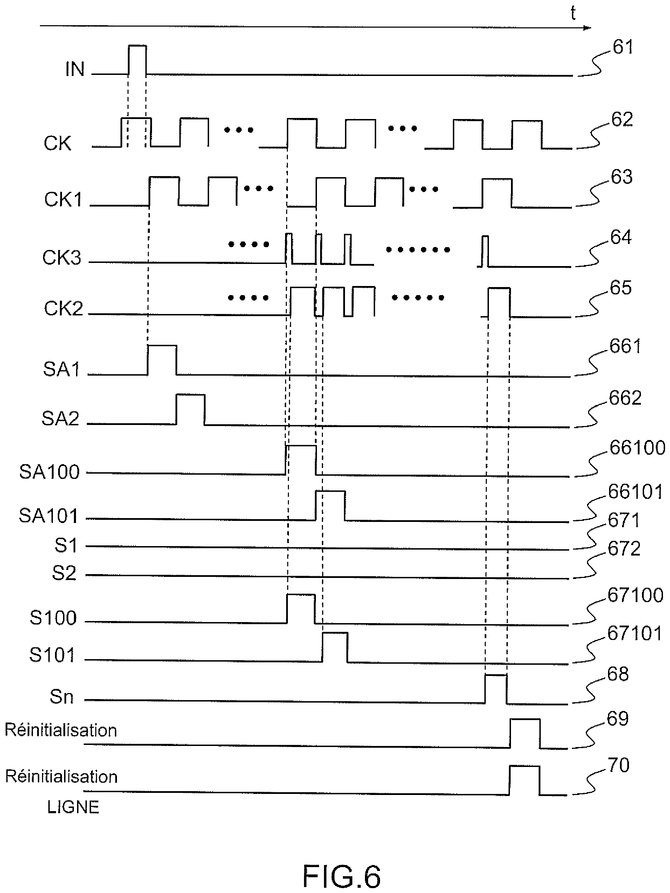

La figure 6 présente un diagramme des temps illustrant le fonctionnement d'un dispositif d'adressage de lignes, selon un mode de réalisation de l'invention.

Un premier chronogramme 61 représente le signal IN de déclenchement de balayage des lignes, au cours d'une période de temps correspondant à la transmission d'une trame.

Un deuxième chronogramme 62 représente pour la même période de temps le signal de la première horloge Ck ; un troisième chronogramme 63 représente le signal de la deuxième horloge Ck1 ; un quatrième chronogramme 64 représente le signal de la quatrième horloge Ck3 ; un cinquième chronogramme 65 représente le signal de la troisième horloge Ck2.

Quatre chronogrammes des sorties d'activation 661, 662, 66100, 66101 représentent pour la même période de temps, les signaux sur les sorties d'activation SA1, SA2, SA100 et SA101 des étages d'entrée correspondant respectivement aux lignes 1, 2, 100 et 101.

Quatre chronogrammes des sorties des étages de sortie 671, 672, 67100, 67101 représentent pour la même période de temps, les signaux sur les sorties S1, S2, S100 et S101 des étages de sortie correspondant respectivement aux lignes 1, 2, 100 et 101.

Un onzième chronogramme 68 représente le signal de la sortie SN du dernier étage N de sortie du dispositif d'adressage de lignes.

Un douzième chronogramme 69 représente le signal de réinitialisation TR des étages d'entrée et de sortie.

Un treizième chronogramme 70 représente le signal de réinitialisation de ligne TL.

Lorsque des lignes doivent être adressées, comme c'est le cas dans l'exemple illustré par la figure 6, pour les lignes 100, 101 et N, celles-ci sont adressées via les sorties Sn des étages de sortie correspondantes du dispositif d'adressage de lignes.

Dans l'exemple illustré par la figure 6, le signal IN de déclenchement de balayage des lignes, déclenche les première et deuxième horloges Ck et Ck1. Ces horloges provoquent alternativement, ainsi que cela est explicité précédemment, le passage à l'état haut des signaux d'activation SAn en sortie des étages n d'entrée du dispositif d'adressage. Dans l'exemple illustré par la figure 6, les sorties d'activation SAn correspondant à toutes les lignes 1 à N sont ainsi activées. De la sorte, des "options", parfois désignées "jetons" ou "tokens" suivant la terminologie anglaise, sont prises pour l'adressage des lignes 1 à N.

L'adressage effectif des lignes choisies est alors réalisé via les troisième et quatrième horloges Ck2, Ck3 permettant le passage à l'état haut des sorties Sn des étages de sortie du dispositif d'adressage de lignes correspondant aux lignes choisies. Dans l'exemple illustré par la figure 6, où les lignes choisies sont les lignes 100 et suivantes, les troisième et quatrième horloges Ck2, Ck3 ne sont déclenchées qu'à partir d'un instant correspondant à la ligne 100, c'est-à-dire après cent coups de la première horloge Ck ou de la deuxième horloge Ck1. Dans l'exemple illustré par la figure 6, un front montant de la quatrième horloge Ck3 coïncide avec le front montant de la sortie d'activation SA100, puis le front descendant de la quatrième horloge Ck3 coïncide avec le front montant de la troisième horloge Ck2, puis le front descendant de la troisième horloge Ck2 coïncide avec le front descendant de la sortie d'activation SA100, etc.

Un autre avantage procuré par le dispositif d'adressage de lignes comprenant un étage d'entrée et un étage de sortie par ligne, est que celui-ci est intrinsèquement protégé contre des phénomènes de perturbations liés à des couplages capacitifs. Une ligne présente une capacité équivalente dont la valeur dépend du nombre de pixels qu'elle contient. Cette ligne va ensuite, lors des lectures des lignes suivantes n+1, n+2, ..., être perturbée par des couplages capacitifs, car les horloges continuent d'être appliquées sur tous les étages, et ces perturbations en volts dépendent directement de la capacité équivalente de la ligne. Par construction, le dispositif d'adressage de lignes selon la présente invention impose une tension correspondant au niveau bas sur une ligne n pendant une durée contrôlée par les horloges, et laisse ensuite cette même ligne n en haute impédance. Ainsi, plus les lignes sont capacitives, plus la tension correspondant au niveau bas est stable sur ces lignes.En outre, les perturbations sur la tension correspondant au niveau bas sont liées aux couplages entre les horloges et les lignes. Lorsqu'un seul étage est présent par ligne, les couplages sont importants, du fait d'une parité due à l'inversion entre les première et deuxième horloges Ck et Ck1 d'un étage à l'autre. Le fait d'ajouter un étage de sortie ne présentant pas d'inversion entre les troisième et quatrième horloges Ck2, Ck3, implique que les couplages entre les horloges et les lignes ne sont plus affectés par cette parité, et les lignes sont ainsi perturbées de manière homogène. Ainsi, lorsque la matrice est une matrice de détection, pour laquelle il est typiquement procédé à une lecture du signal présent sur les colonnes, la perturbation des lignes se retrouve sur les colonnes et donc s'ajoute au signal lu. L'homogénéité des perturbations due à l'usage d'un étage d'entrée et d'un étage de sortie par ligne, permet d'obtenir une image de meilleure qualité, non affectée de visibilités spatiales ainsi que cela pourrait être le cas en utilisant un étage unique par ligne.

## Revendications

1. Dispositif d'adressage des lignes d'une matrice de détection pour imagerie par rayonnements ionisants, la matrice de détection comprenant une pluralité de lignes de pixels et étant réalisée sur un substrat, le dispositif d'adressage étant également réalisé sur ledit substrat uniquement à partir de transistors couches minces TFT de type N ou uniquement à partir de transistors couches minces TFT de type P, et comprenant une pluralité d'étages n aptes à délivrer en leurs sorties respectives des signaux (Sn) de commutation des niveaux haut et bas d'un signal appliqué à des dispositifs de commutation en sortie sur une ligne correspondante de la matrice et en ce que chaque ligne n de la matrice est associée à un étage n et en ce que chaque étage comprend un étage d'entrée (50) et un étage de sortie (51), l'étage d'entrée (50) délivrant un signal d'activation (SAn) de l'étage de sortie (51), l'étage de sortie (51) délivrant en cas d'activation, ledit signal de commutation (Sn) de la ligne n correspondante.

2. Dispositif d'adressage de lignes suivant la revendication 1, **caractérisé en ce que** chaque étage d'entrée (50) d'une ligne n comprend une sortie restituant le signal d'activation (SAn), un transistor de sortie de l'étage d'entrée (T30), transmettant une impulsion d'un signal d'horloge au niveau de la sortie d'activation (SAn), sa grille étant connectée à un noeud interne de l'étage d'entrée (50), sa source étant reliée à la ligne de sortie d'activation (SAn) et son drain recevant le signal d'une première horloge (Ck), un premier transistor de commande de l'étage d'entrée (T10) étant apte à précharger la grille du transistor de sortie de l'étage d'entrée (T30), sa source étant connectée à la grille du transistor de sortie de l'étage d'entrée (T30), sa grille et son drain étant reliés à la sortie d'activation (SAn-1) de l'étage de la ligne précédente n-1, un deuxième transistor de commande de l'étage d'entrée (T20) étant apte à décharger la grille du transistor de sortie de l'étage d'entrée (T30), son drain étant connecté à la grille du transistor de sortie de l'étage d'entrée (T30).

3. Dispositif d'adressage de lignes suivant l'une quelconque des revendications précédentes, **caractérisé en ce que** chaque étage de sortie (51) d'une ligne n comprend une sortie restituant le signal de commutation (Sn) de la ligne n, un transistor de sortie de l'étage de sortie (T31), transmettant une impulsion d'un signal d'horloge au niveau de la sortie (Sn), dont la grille est connectée à un noeud interne de l'étage de sortie (51), la source est reliée à la sortie de l'étage de sortie (Sn) et le drain reçoit le signal d'une troisième horloge (Ck2), un premier transistor de commande de l'étage de sortie (T11) étant apte à précharger la grille du transistor de sortie de l'étage de sortie (T31), sa source étant connectée à la grille du transistor de sortie de l'étage de sortie (T31), sa grille et son drain étant reliés à la sortie d'activation (SAn) de l'étage d'entrée (50), un deuxième transistor de commande de l'étage de sortie (T21) étant apte à décharger la grille du transistor de sortie de l'étage de sortie (T31), son drain étant connecté à la grille du transistor de sortie de l'étage de sortie (T31).

4. Dispositif d'adressage de lignes suivant la revendication 3, **caractérisé en ce qu'**un condensateur de compensation de l'étage d'entrée (C10) est disposé entre le signal d'une seconde horloge (Ck1), en opposition de phase du signal de ladite première horloge (Ck).

5. Dispositif d'adressage de lignes suivant l'une quelconque des revendications 3 et 4, **caractérisé en ce qu'**un condensateur d'élévation de l'étage d'entrée (C20) est connecté entre la grille et la source du transistor de sortie de l'étage d'entrée (T30).

6. Dispositif d'adressage de lignes suivant l'une quelconque des revendications 3 à 5, **caractérisé en ce qu'**un transistor de décharge de l'étage d'entrée (T40) est connecté à la sortie d'activation (SAn) en sortie de l'étage d'entrée (50), sa grille étant reliée à la grille du deuxième transistor de commande de l'étage d'entrée (T20) et au signal de sortie d'activation (SAn+1) de l'étage suivant n+1.

7. Dispositif d'adressage de lignes suivant l'une quelconque des revendications 3 à 6, **caractérisé en ce qu'**un condensateur de compensation de l'étage de sortie (C11) est disposé entre le signal d'une quatrième horloge (Ck3), en opposition de phase du signal de ladite troisième horloge (Ck2).

8. Dispositif d'adressage de lignes suivant l'une quelconque des revendications 3 à 7, **caractérisé en ce qu'**un condensateur d'élévation de l'étage de sortie (C21) est connecté entre la grille et la source du transistor de sortie de l'étage de sortie (T30).

9. Dispositif d'adressage de lignes suivant l'une quelconque des revendications 3 à 8, **caractérisé en ce qu'**un transistor de décharge de l'étage de sortie (T41) est connecté à la sortie (Sn) de l'étage de sortie (51), sa grille étant reliée à la grille du deuxième transistor de commande de l'étage de sortie (T21) et au signal de sortie d'activation (SAn+1) de l'étage suivant n+1.

10. Dispositif d'adressage de lignes suivant l'une quelconque des revendications précédentes, **caractérisé en ce que** chaque étage d'entrée et de sortie (50, 51) d'une ligne n comprend un commutateur de réinitialisation configuré pour disposer tous les transistors dans leur état bloqué.

11. Dispositif d'adressage de lignes suivant la revendication 10, dans lequel les commutateurs de réinitialisation sont formés par des transistors de réinitialisation (TR), un transistor de réinitialisation (TR) de l'étage d'entrée (50) présentant une grille commandée par une impulsion d'un signal de réinitialisation, sa source étant connectée aux sources du deuxième transistor de commande de l'étage d'entrée (T20), et son drain étant connecté au drain du deuxième transistor de commande de l'étage d'entrée (T20).

12. Dispositif d'adressage de lignes suivant l'une quelconque des revendications 10 à 11, dans lequel les commutateurs de réinitialisation sont formés par des transistors de réinitialisation (TR), un transistor de réinitialisation (TR) de l'étage de sortie (51) présentant une grille commandée par une impulsion d'un signal de réinitialisation, sa source étant connectée aux sources du deuxième transistor de commande de l'étage de sortie (T21), et son drain étant connecté au drain du deuxième transistor de commande de l'étage de sortie (T21).

13. Dispositif d'adressage de lignes suivant l'une quelconque des revendications 3 à 12, **caractérisé en ce que** chaque étage de sortie (51) d'une ligne n comprend un commutateur de réinitialisation de lignes configuré pour imposer un niveau bas aux signaux de commutation (Sn).

14. Dispositif d'adressage de lignes suivant la revendication 13, dans lequel le commutateur de réinitialisation de ligne est formé par un transistor de réinitialisation de ligne (TL) commandé via sa grille par un signal de réinitialisation de ligne, son drain étant connecté à la source du transistor de sortie de l'étage de sortie (T31), sa source étant connectée aux sources du deuxième transistor de commande de l'étage d'entrée (T20), du transistor de décharge de l'étage d'entrée (T40), du deuxième transistor de commande de l'étage de sortie (T21) et du transistor de décharge de l'étage de sortie (T41).

15. Dispositif d'adressage de lignes suivant l'une quelconque des revendications 3 à 14, **caractérisé en ce que** chaque étage de sortie (51) d'une ligne n comprend un commutateur de réinitialisation de matrice configuré pour imposer un niveau haut ou bas à la matrice de détection.

16. Dispositif d'adressage de lignes suivant la revendication 15, dans lequel le commutateur de réinitialisation de matrice est formé par un transistor de réinitialisation de matrice (TLON) commandé via sa grille et son drain par un signal de réinitialisation de matrice, sa source étant connectée à la source du transistor de sortie de l'étage de sortie (T31).

## Patentansprüche

1. Vorrichtung zum Adressieren von Zeilen einer Detektionsmatrix für Bildgebung anhand ionisierender Strahlungen, wobei die Detektionsmatrix eine Vielzahl von Zeilen n von Pixeln beinhaltet und auf einem Substrat gebildet ist, wobei die Adressierungsvorrichtung ebenfalls auf dem Substrat einzig anhand von Dünnschichttransistoren TFT vom Typ N oder einzig anhand von Dünnschichttransistoren TFT vom Typ P gebildet ist und eine Vielzahl von Stufen n beinhaltet, die in der Lage sind, an ihren jeweiligen Ausgängen Signale (Sn) zum Umschalten der hohen und der niedrigen Pegel eines an Umschaltvorrichtungen am Ausgang an einer entsprechenden Zeile der Matrix angelegten Signals abzugeben, wobei jede Zeile n der Matrix mit einer Stufe n assoziiert ist, wobei jede Stufe eine Eingangsstufe (50) und eine Ausgangsstufe (51) beinhaltet, wobei die Eingangsstufe (50) ein Aktivierungssignal (SAn) der Ausgangsstufe (51) abgibt, wobei die Ausgangsstufe (51) im Falle der Aktivierung das Umschaltsignal (Sn) der entsprechenden Zeile n abgibt.

2. Vorrichtung zum Adressieren von Zeilen nach Anspruch 1, **dadurch gekennzeichnet, dass** jede Eingangsstufe (50) einer Zeile n einen Ausgang beinhaltet, welcher das Aktivierungssignal (SAn) wiedergibt, einen Ausgangstransistor der Eingangsstufe (T30), welcher einen Impuls eines Uhrsignals auf Höhe des Aktivierungsausgangs (SAn) überträgt, wobei dessen Gate mit einem internen Knoten der Eingangsstufe (50) verbunden ist, wobei seine Source mit der Aktivierungs-Ausgangsleitung (SAn) verbunden ist, und sein Drain das Signal einer ersten Uhr (Ck) empfängt, wobei ein erster Steuertransistor der Eingangsstufe (T10) in der Lage ist, das Gate des Ausgangstransistors der Eingangsstufe (T30) vorzuladen, wobei seine Source mit dem Gate des Ausgangstransistors der Eingangsstufe (T30) verbunden ist, sein Gate und sein Drain mit dem Aktivierungsausgang (SAn-1) der Stufe der vorherigen Zeile n-1 verbunden sind, wobei ein zweiter Steuertransistor der Eingangsstufe (T20) in der Lage ist, das Gate des Ausgangstransistors der Eingangsstufe (T30) zu entladen, wobei sein Drain mit dem Gate des Ausgangstransistors der Eingangsstufe (T30) verbunden ist.

3. Vorrichtung zum Adressieren von Zeilen nach einem der vorhergehenden Ansprüche, **dadurch gekennzeichnet, dass** jede Ausgangsstufe (51) einer Zeile n einen Ausgang beinhaltet, welcher das Umschaltsignal (Sn) der Zeile n wiedergibt, einen Ausgangstransistor der Ausgangsstufe (T31), welcher einen Impuls eines Uhrsignals auf Höhe des Ausgangs (Sn) überträgt, wobei dessen Gate mit einem internen Knoten der Ausgangsstufe (51) verbunden ist, wobei die Source mit dem Ausgang der Ausgangsstufe (Sn) verbunden ist und der Drain das Signal einer dritten Uhr (Ck2) empfängt, wobei ein erster Steuertransistor der Ausgangsstufe (T11) in der Lage ist, das Gate des Ausgangstransistors der Ausgangsstufe (T31) vorzuladen, seine Source sein ihr Drain mit dem Aktivierungsausgang (SAn) der Eingangsstufe (50) verbunden sind, wobei ein zweiter Steuertransistor der Ausgangsstufe (T21) in der Lage ist, das Gate des Ausgangstransistors der Ausgangsstufe (T31) zu entladen, wobei sein Drain mit dem Gate des Ausgangstransistors der Ausgangsstufe (T31) verbunden ist.

4. Vorrichtung zum Adressieren von Zeilen nach Anspruch 3, **dadurch gekennzeichnet, dass** ein Kompensationskondensator der Eingangsstufe (C10) gegenphasig zum Signal der ersten Uhr (Ck) zwischen dem Signal einer zweiten Uhr (Ck1) angeordnet ist.

5. Vorrichtung zum Adressieren von Zeilen nach einem der Ansprüche 3 und 4, **dadurch gekennzeichnet, dass** ein Anhebekondensator der Eingangsstufe (C20) zwischen dem Gate und der Source des Ausgangstransistors der Eingangsstufe (T30) verbunden ist.

6. Vorrichtung zum Adressieren von Zeilen nach einem der Ansprüche 3 bis 5, **dadurch gekennzeichnet, dass** ein Entladetransistor der Eingangsstufe (T40) mit dem Aktivierungsausgang (SAn) am Ausgang der Eingangsstufe (50) verbunden ist, wobei sein Gate mit dem Gate des zweiten Steuertransistors der Eingangsstufe (T20) und mit dem Aktivierungsausgangssignal (SAn+1) der folgenden Stufe n+1 verbunden ist.

7. Vorrichtung zum Adressieren von Zeilen nach einem der Ansprüche 3 bis 6, **dadurch gekennzeichnet, dass** ein Kompensationskondensator der Ausgangsstufe (C11) gegenphasig zum Signal der dritten Uhr (Ck2) zwischen dem Signal einer vierten Uhr (Ck3) angeordnet ist.

8. Vorrichtung zum Adressieren von Zeilen nach einem der Ansprüche 3 bis 7, **dadurch gekennzeichnet, dass** ein Anhebekondensator der Ausgangsstufe (C21) zwischen dem Gate und der Source des Ausgangstransistors der Ausgangsstufe (T30) verbunden ist.

9. Vorrichtung zum Adressieren von Zeilen nach einem der Ansprüche 3 bis 8, **dadurch gekennzeichnet, dass** ein Entladetransistor der Ausgangsstufe (T41) mit dem Ausgang (Sn) der Ausgangsstufe (51) verbunden ist, wobei sein Gate mit dem Gate des zweiten Steuertransistors der Ausgangsstufe (T21) und mit dem Aktivierungsausgangssignal (SAn+1) der folgenden Stufe n+1 verbunden ist.

10. Vorrichtung zum Adressieren von Zeilen nach einem der vorhergehenden Ansprüche, **dadurch gekennzeichnet, dass** jede Eingangs- und Ausgangsstufe (50, 51) einer Zeile einen Reinitialisierungs-Umschalter beinhaltet, welcher konfiguriert ist, um alle Transistoren in ihren gesperrten Zustand zu versetzen.

11. Vorrichtung zum Adressieren von Zeilen nach Anspruch 10, bei welcher die Reinitialisierungs-Umschalter aus Reinitialisierungs-Transistoren (TR) gebildet sind, wobei ein Reinitialisierungs-Transistor (TR) der Eingangsstufe (50) ein Gate aufweist, welches durch einen Impuls eines Reinitialisierungs-Signals gesteuert wird, wobei seine Source mit den Sources des zweiten Steuertransistors der Eingangsstufe (T20) verbunden ist und sein Drain mit dem Drain des zweiten Steuertransistors der Eingangsstufe (T20) verbunden ist.

12. Vorrichtung zum Adressieren von Zeilen nach einem der Ansprüche 10 bis 11, bei welcher die Reinitialisierungs-Umschalter aus Reinitialisierungs-Transistoren (TR) gebildet sind, wobei ein Reinitialisierungs-Transistor (TR) der Ausgangsstufe (51) ein Gate aufweist, welches durch einen Impuls eines Reinitialisierungs-Signals gesteuert wird, wobei seine Source mit den Sources des zweiten Steuertransistors der Ausgangsstufe (T21) verbunden ist und sein Drain mit dem Drain des zweiten Steuertransistors der Ausgangsstufe (T20) verbunden ist.

13. Vorrichtung zum Adressieren von Zeilen nach einem der Ansprüche 3 bis 12, **dadurch gekennzeichnet, dass** jede Ausgangsstufe (51) einer Zeile n einen Zeilen-Reinitialisierungs-Umschalter beinhaltet, welcher konfiguriert ist, um den Umschaltsignalen (Sn) einen niedrigen Pegel aufzuerlegen.

14. Vorrichtung zum Adressieren von Zeilen nach Anspruch 13, bei welcher der Zeilen-Reinitialisierungs-Umschalter durch einen Zeilen-Reinitialisierungs-Transistor (TL) gebildet ist, welcher über sein Gate durch ein Zeilen-Reinitialisierungs-Signal gesteuert wird, wobei sein Drain mit der Source des Ausgangstransistors der Ausgangsstufe (T31) verbunden ist, seine Source mit den Sources des zweiten Steuertransistors der Eingangsstufe (T20), des Entladetransistors der Eingangsstufe (T40), des zweiten Steuertransistors der Ausgangsstufe (T21) und des Entladetransistors der Ausgangsstufe (T41) verbunden ist.

15. Vorrichtung zum Adressieren von Zeilen nach einem der Ansprüche 3 bis 14, **dadurch gekennzeichnet, dass** jede Ausgangsstufe (51) einer Zeile n einen Matrix-Reinitialisierungs-Umschalter beinhaltet, welcher konfiguriert ist, um der Detektionsmatrix einen hohen oder einen niedrigen Pegel aufzuerlegen.

16. Vorrichtung zum Adressieren von Zeilen nach Anspruch 15, bei welcher der Matrix-Reinitialisierungs-Umschalter durch einen Matrix-Reinitialisierungs-Transistor (TLON) gebildet ist, welcher über sein Gate und seinen Drain durch ein Matrix-Reinitialisierungs-Signal gesteuert wird, wobei seine Source mit der Source des Ausgangstransistors der Ausgangsstufe (T31) verbunden ist.

## Claims

1. A device for addressing the rows of a detection matrix for imaging by ionizing radiations, the detection matrix comprising a plurality of rows n of pixels and being produced on a substrate, the addressing device also being produced on said substrate only from thin film transistors TFT of N type or only from thin film transistors TFT of P type, and comprising a plurality of stages n suitable for delivering at their respective outputs signals (Sn) for switching between the high and low levels of a signal applied to switching devices at the output on a corresponding row of the matrix, each row n of the matrix being associated with a stage n, each stage comprising an input stage (50) and an output stage (51), the input stage (50) delivering an activation signal (SAn) for the output stage (51), the output stage (51) delivering, in case of activation, said switching signal (Sn) for the corresponding row n.

2. The row addressing device according to claim 1, **characterized in that** each input stage (50) of a row n comprises an output restoring the activation signal (SAn), an output transistor of the input stage (T30), transmitting a pulse of a clock signal at the activation output (SAn), its gate being connected to an internal node of the input stage (50), its source being linked to the activation output row (SAn) and its drain receiving the signal of a first clock (Ck), a first control transistor of the input stage (T10) being suitable for precharging the gate of the output transistor of the input stage (T30), its source being connected to the gate of the output transistor of the input stage (T30), its gate and its drain being linked to the activation output (SAn-1) of the stage of the preceding row n-1, a second control transistor of the input stage (T20) being suitable for discharging the gate of the output transistor of the input stage (T30), its drain being connected to the gate of the output transistor of the input stage (T30).

3. The row addressing device according to any one of the preceding claims, **characterized in that** each output stage (51) of a row n comprises an output restoring the switching signal (Sn) of the row n, an output transistor of the output stage (T31), transmitting a pulse of a clock signal at the output (Sn), of which the gate is connected to an internal node of the output stage (51), the source is linked to the output of the output stage (Sn) and the drain receives the signal of a third clock (Ck2), a first control transistor of the output stage (T11) being suitable for precharging the gate of the output transistor of the output stage (T31), its source being connected to the gate of the output transistor of the output stage (T31), its gate and its drain being linked to the activation output (SAn) of the input stage (50), a second control transistor of the output stage (T21) being suitable for discharging the gate of the output transistor of the output stage (T31), its drain being connected to the gate of the output transistor of the output stage (T31).

4. The row addressing device according to claim 3, **characterized in that** a compensation capacitor of the input stage (C10) is arranged between the signal of a second clock (Ck1), in phase opposition to the signal of said first clock (Ck).

5. The row addressing device according to any one of claims 3 and 4, **characterized in that** a step-up capacitor of the input stage (C20) is connected between the gate and the source of the output transistor of the input stage (T30).

6. The row addressing device according to any one of claims 3 to 5, **characterized in that** a discharge transistor of the input stage (T40) is connected to the activation output (SAn) at the output of the input stage (50), its gate being linked to the gate of the second control transistor of the input stage (T20) and to the activation output signal (SAn+1) of the next stage n+1.

7. The row addressing device according to any one of claims 3 to 6, **characterized in that** a compensation capacitor of the output stage (C11) is arranged between the signal of a fourth clock (Ck3), in phase opposition to the signal of said third clock (Ck2).

8. The row addressing device according to any one of claims 3 to 7, **characterized in that** a step-up capacitor of the output stage (C21) is connected between the gate and the source of the output transistor of the output stage (T30).

9. The row addressing device according to any one of claims 3 to 8, **characterized in that** a discharge transistor of the output stage (T41) is connected to the output (Sn) of the output stage (51), its gate being linked to the gate of the second control transistor of the output stage (T21) and to the activation output signal (SAn+1) of the next stage n+1.

10. The row addressing device according to any one of the preceding claims, **characterized in that** each input and output stage (50, 51) of a row n comprises a reset switch configured to set all the transistors to their blocked state.

11. The row addressing device according to claim 10, in which the reset switches are formed by reset transistors (TR), a reset transistor (TR) of the input stage (50) having a gate controlled by a pulse of a reset signal, its source being connected to the sources of the second control transistor of the input stage (T20), and its drain being connected to the drain of the second control transistor of the input stage (T20).

12. The row addressing device according to any one of claims 10 to 11, in which the reset switches are formed by reset transistors (TR), a reset transistor (TR) of the output stage (51) having a gate controlled by a pulse of a reset signal, its source being connected to the sources of the second control transistor of the output stage (T21), and its drain being connected to the drain of the second control transistor of the output stage (T21).

13. The row addressing device according to any one of claims 3 to 12, **characterized in that** each output stage (51) of a row n comprises a row reset switch configured to impose a low level on the switching signals (Sn).

14. The row addressing device according to claim 13, in which the row reset switch is formed by a row reset transistor (TL) controlled via its gate by a row reset signal, its drain being connected to the source of the output transistor of the output stage (T31), its source being connected to the sources of the second control transistor of the input stage (T20), of the discharge transistor of the input stage (T40), of the second control transistor of the output stage (T21) and of the discharge transistor of the output stage (T41).

15. The row addressing device according to any one of claims 3 to 14, **characterized in that** each output stage (51) of a row n comprises a matrix reset switch configured to impose a high or low level on the detection matrix.

16. The row addressing device according to claim 15, in which the matrix reset switch is formed by a matrix reset transistor (TLON) controlled via its gate and its drain by a matrix reset signal, its source being connected to the source of the output transistor of the output stage (T31).
